# DEMANDE DE BREVET EUROPEEN

(11) **EP 1 690 462 A1**
(43) Date de publication de la demande: **16.08.2006**
(21) Numéro de dépôt: 06001357.0
(22) Date de dépôt: 23.01.2006
(51) Int. Cl.: A43C 11/20, A43C 7/00, A43C 7/08, F16G 11/10, A43C 11/00

(54) **Dispositif de laçage pour chaussure de sport**

(30) Priorité: 11.02.2005 FR 0501417
(71) Demandeur: Salomon S.A., 74370 Metz-Tessy (FR)
(72) Inventeur: Borel, René, 74540 Saint-Sylvestre (FR); Marechal, Pierre Alexis, 74000 Annecy (FR); Marechal, Laurent, 74370 Villaz (FR)

(57) **Abrégé**

Article chaussant (1) prévu pour accueillir le pied d'un utilisateur et comportant un dispositif de laçage, ledit dispositif de laçage comportant au moins deux passants (10) prévus pour permettre à un lacet (11) de glisser et un bloqueur (12) capable de coincer ledit lacet (11), ledit bloqueur (12) comportant un organe de commande (23) assurant le déblocage du lacet (11), ledit article chaussant ayant une position ouverte, permettant l'introduction du pied et une position serrée dans laquelle le pied est fermement maintenu dans ledit article chaussant, le passage de la position ouverte à la position serrée se faisant par une traction sur le lacet (11) et le passage de la position serrée à la position ouverte se faisant par une traction sur l'organe de commande (23) du bloqueur.

## Description

La présente invention concerne les chaussures de sport équipées d'un dispositif de laçage et comportant un bloqueur de lacet.

Le document US 2003/0226284 décrit un article chaussant pour un patin à roulettes qui comprend une tige équipée d'un dispositif de laçage qui rapproche deux pans de la partie basse d'une tige. Entre lesdits deux pans, se trouve une languette qui s'étend depuis l'avant de l'article chaussant jusqu'au sommet dudit article. Chacun des deux pans comprend une pluralité de passants disposés dans la partie basse uniquement Le dispositif de laçage comprend également un lacet et un bloqueur de lacet. Le bloqueur de lacet est fixé au sommet de la languette. L'article chaussant comprend en outre un guide qui est fixé sur la languette sous le bloqueur et qui oriente le lacet vers le bloqueur. Un tel système présente de nombreux inconvénients. La fixation du bloqueur de lacet au sommet de la languette rend ce dispositif peu efficace du fait de la distance existante entre la sortie du lacet de la zone de laçage, au niveau des deux pans de la partie basse de la tige, et la position haute du bloqueur. Une traction sur le lacet tend à rapprocher le bloqueur du guide, ce qui a pour effet de plier la partie haute de la languette. Dans le cas où pour éviter le problème de pliure de la languette on rigidifie celle-ci, le confort est détérioré. De plus, les lacets utilisés pour les articles chaussants présentent toujours une certaine élasticité. Les portions de lacet qui se trouvent entre le guide et le bloqueur, sont sans utilité pour le serrage, à proprement parler, car ils n'assurent pas le rapprochement des deux pans opposés. Cependant ils ne sont pas sans effet en ce qui concerne l'extension globale du lacet, laquelle est due à l'élasticité inhérente de celui-ci. D'autre part, la fixation permanente du bloqueur sur le sommet de la languette, fait qu'il est très difficile de remplacer le lacet lorsque celui-ci est cassé, et même impossible de remplacer le bloqueur lorsqu'il est endommagé. Enfin l'utilisation du dispositif de laçage décrit dans cette demande de brevet manque d'ergonomie dans la mesure où l'utilisateur doit exercer une pression sur le bouton du bloqueur pour permettre le décoincement du lacet, et il doit maintenir cette pression tout le temps nécessaire au passage de la position serrée de l'article chaussant à la position ouverte, position dans laquelle l'utilisateur peut retirer son pied. D'autre part, la pression que l'utilisateur doit exercer sur le bouton est peu naturelle car elle sensiblement parallèle à la languette et dirigée vers le haut de la languette.

La présente invention a pour objectif de fournir un dispositif de laçage qui permette de s'affranchir des limitations posées par les dispositifs connus dans l'art antérieur. Notamment, l'invention a pour objectif de fournir un article chaussant équipé d'un dispositif de laçage optimisé.

L'invention a également pour objectif un article chaussant ayant une tige haute et étant équipé d'un moyen de serrage utilisant un ensemble lacet/bloqueur et qui autorise pour l'action de serrage comme pour l'action de desserrage la manoeuvre avec une seule main.

L'objectif de l'invention est obtenu par la fourniture d'un article chaussant prévue pour accueillir le pied d'un utilisateur et comportant un dispositif de laçage ledit dispositif de laçage comportant au moins deux passants prévus pour permettre à un lacet de glisser et un bloqueur capable de coincer ledit lacet, ledit bloqueur comportant un organe de commande assurant le déblocage du lacet, ledit article chaussant ayant une position ouverte, permettant l'introduction du pied et une position serrée dans laquelle le pied est fermement maintenu dans ledit article chaussant, article chaussant caractérisé en ce que le passage de la position ouverte à la position serrée se fait par une traction sur le lacet et en ce que le passage de la position serrée à la position ouverte se fait par une traction sur l'organe de commande du bloqueur

Avantageusement seuls des effort de traction sont demandés à l'utilisateur pour ouvrir ou serrer l'article chaussant.

Avantageusement, l'article chaussant selon l'invention comprend des moyens de fixation amovible dudit bloqueur audit article chaussant de telle façon que les phases de serrage et de d'ouverture de l'article chaussant puissent se faire avec une seule main et que le sous-ensemble constitué par le lacet et le bloqueur puisse être démonté dudit article chaussant sans l'aide d'un outil.

L'objectif de l'invention est également obtenu par la fourniture d'un article chaussant prévu pour accueillir le pied d'un utilisateur et comportant une tige haute; ladite tige haute comprenant une partie basse équipée d'un dispositif de laçage, une partie haute prévue pour envelopper le bas de jambe de l'utilisateur et une languette s'étendant depuis ladite partie basse à laquelle elle est fixée jusqu'au sommet de ladite partie haute; ladite languette comprenant une zone basse, située au niveau de la partie basse, une zone haute située au niveau de la partie haute et une zone intermédiaire située entre la zone basse et la zone haute; ledit dispositif de laçage comportant au moins deux passants prévus pour permettre à un lacet de glisser et un bloqueur capable de coincer ledit lacet, caractérisé en ce que le bloqueur est fixée sur ladite zone intermédiaire de la languette.

L'objectif de l'invention est également obtenu par la fourniture d'un article chaussant prévu pour accueillir le pied d'un utilisateur et comportant un dispositif de laçage, ledit dispositif de laçage comportant au moins deux passants prévus pour permettre à un lacet de glisser et un bloqueur capable de coincer ledit lacet, ledit bloqueur comprenant un organe de blocage mobile à l'intérieur d'un corps, caractérisé en ce que l'article chaussant comprend des moyens de fixation amovible dudit bloqueur audit article chaussant de telle façon que les phases de serrage et de desserrage de l'article chaussant puissent se faire avec une seule main et que le sous-ensemble lacet/bloqueur puisse être démonté dudit article chaussant sans l'aide d'un outil.

L'invention sera mieux comprise à la lecture de la description qui suit à laquelle est annexé le dessin dans lequel:
La figure 1 est une vue en perspective d'un article chaussant selon un premier mode de réalisation de l'invention.
La figure 2 est une vue en perspective de la face visible du capot de rétention du bloqueur de lacet.
La figure 3 est une vue en perspective de la face cachée du capot de rétention du bloqueur de lacet.
La figure 4 est une vue du bloqueur.
La figure 5 est une vue en perspective de l'article chaussant lors de la phase de serrage.
La figure 6 est une vue en perspective de l'article chaussant lors de la phase de desserrage.
La figure 7 est une vue en perspective d'un article chaussant selon un deuxième mode de réalisation de l'invention.
La figure 8 est une vue de détail du deuxième mode de réalisation de l'invention.

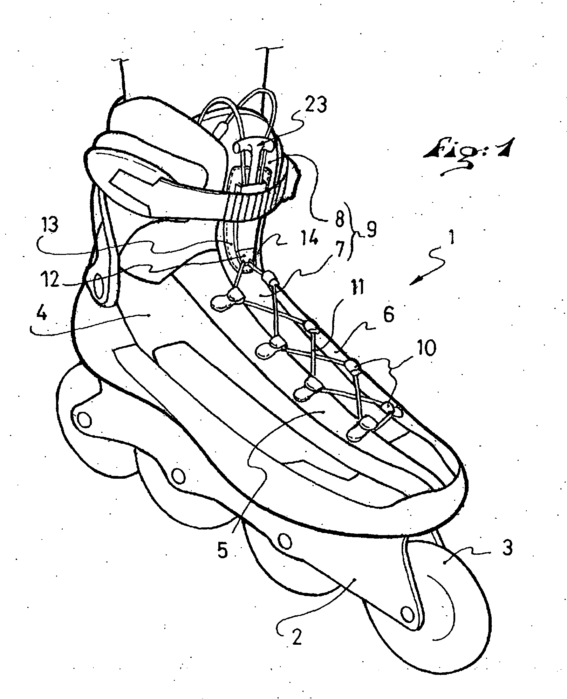

La figure 1 montre un article chaussant 1 selon un premier mode de réalisation de l'invention. Il s'agit d'un patin à roulettes disposant d'un châssis 2 équipé de quatre roues 3. L'article chaussant comprend une semelle surmontée d'une tige 4. La partie basse de la tige 4 comprend un pan latéral 5 et un pan médial 6 lui faisant face. Le rapprochement des deux pans, l'un par rapport à l'autre, permet d'ajuster le volume intérieur de l'article chaussant et de serrer la tige contre le pied de l'utilisateur. Pour effectuer ledit serrage, un dispositif de laçage comprenant une pluralité de passants 10, un lacet 11 et un bloqueur de lacet 12 est mis en place dans la partie basse de la tige. Les passants 10 sont répartis sur chacun des bords des pans latéral et médial se faisant face. Les brins du lacet 11 passent alternativement dans un des passants fixés sur le pan médial 6 puis dans un des passants fixés sur le pan latéral 5. Au sortir de la zone de laçage, les deux brins du lacet pénètrent dans le bloqueur 12.

La languette 9 comprend une zone basse 7 prévue pour recouvrir le dessus du pied de l'utilisateur et qui est à son tour recouverte par les passages des brins du lacet 11 entre les passants 10. La languette 9 comprend également une zone haute 8 prévue pour envelopper la portion antérieure du bas de jambe de l'utilisateur. Entre ladite zone basse 7 et la dite zone haute 8, la languette 9 comprend une zone intermédiaire 14 qui lorsque le pied de l'utilisateur est inséré dans l'article chaussant se trouve au voisinage du pli de flexion de l'articulation de la cheville.

Le bloqueur 12 est maintenu en place sur la languette dans la zone intermédiaire 14 de celle-ci, grâce à un capot 13, lequel est fixé sur la languette 9. Dans l'exemple décrit, le capot est cousu sur la languette 9. Ceci n'est pas limitatif et on pourra envisager la fixation du capot à la languette de tout autre manière. De même, il est envisagé dans le cadre de l'invention de prévoir le capot comme étant une partie intégrante de la languette.

Le bloqueur 12 se trouve directement à la sortie de la zone de laçage, les deux brins du lacet 11 passent sans intermédiaire depuis les deux passants 10 placés les plus haut vers le bloqueur 12. Ainsi, la perte de tension due à l'élasticité du lacet est minimisée.

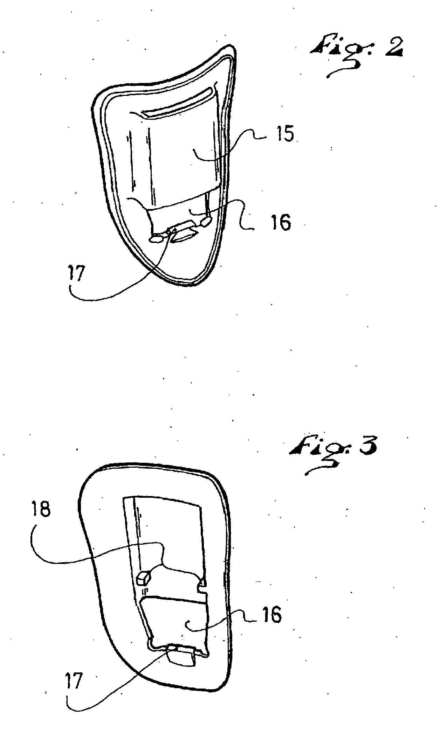

Les figures 2 et 3 décrivent respectivement des vues en perspective de la face visible et de la face cachée du capot 13. Celui-ci comprend un tunnel 15 dans le prolongement duquel se trouve une ouverture 16. L'ouverture 16 est dimensionnée de telle façon que le bloqueur 12 puisse venir s'y encastrer. Le bord inférieur de l'ouverture 16 est pourvu d'un ergot 17 légèrement saillant qui sécurise l'encastrement du bloqueur 12. Pour éviter que le bloqueur ne soit entraîné dans le tunnel lorsque l'utilisateur exerce une traction sur le lacet, deux butées 18 sont placées à la base du tunnel. Le contour général du capot a une forme de type triangulaire avec une partie basse plus fine que la partie haute.

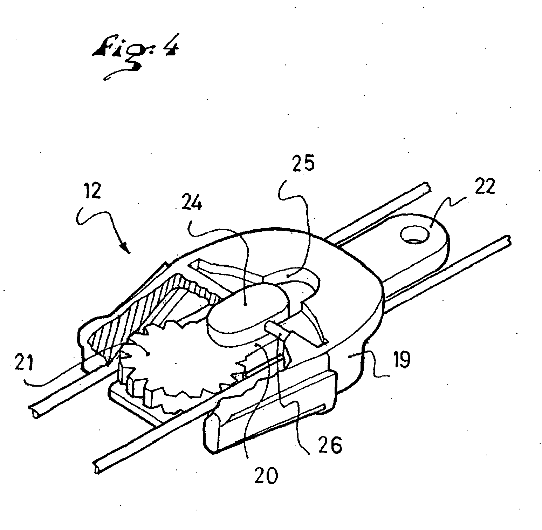

La figure 4 décrit le bloqueur 12. Il comprend un corps 19 ayant un volume interne comprenant deux rampes inclinées se faisant face qui sont destinées à recevoir les deux brins du lacet. Entre les deux rampes inclinées, un organe de blocage 20 est appelé à coulisser. L'organe de blocage 20 comprend une partie terminale inférieure dentée 21 qui coince les deux brins du lacet et une partie terminale supérieure 22 destinée à être reliée à un organe de commande 23. L'organe de blocage 20 comprend également un coulisseau 24 reçu dans une glissière 25 du corps. Le mouvement du coulisseau 24 dans la glissière 25 permet à l'organe de blocage de prendre différentes positions par rapport au corps 19, depuis une position de blocage jusqu'à une position complètement ouverte. Une lame ressort 26 est disposée entre l'organe de blocage 20 et le corps 19, avec pour effet le maintien et le rappel de l'organe de blocage dans la position de blocage. Cette lame ressort 26 traverse transversalement le coulisseau 24 et ses deux extrémités sont reçues dans deux renfoncements placés de part et d'autre de la glissière 25.

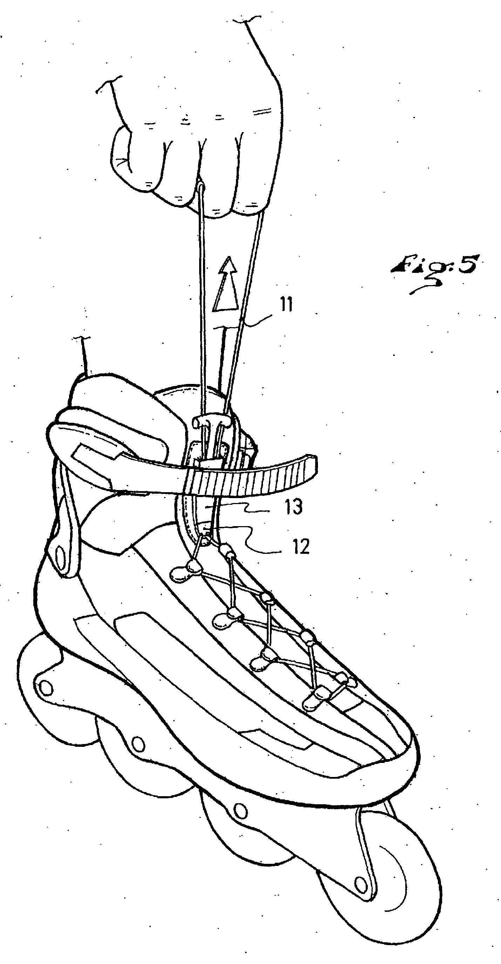

La figure 5 décrit la phase de serrage. Après avoir mis son pied dans l'article chaussant, l'utilisateur se contente d'exercer une traction sur la boucle du lacet 11. Le bloqueur est maintenu en place dans l'encastrement par les butées 18. Dans la mesure où la traction exercée sur le lacet 11 est plus forte que la force de rappel de la lame ressort 26, les deux brins du lacet entraînent par friction l'organe de blocage 20 vers le haut. Aussitôt que la tension sur le lacet 11 est relâchée la lame ressort ramène l'organe de blocage 20 en position de blocage, ce qui a pour effet de coincer les deux brins du lacet et de sécuriser le serrage de l'article chaussant. Comme on vient de le voir, la phase de serrage peut être réalisée par la seule main qui exerce la traction sur la boucle du lacet.

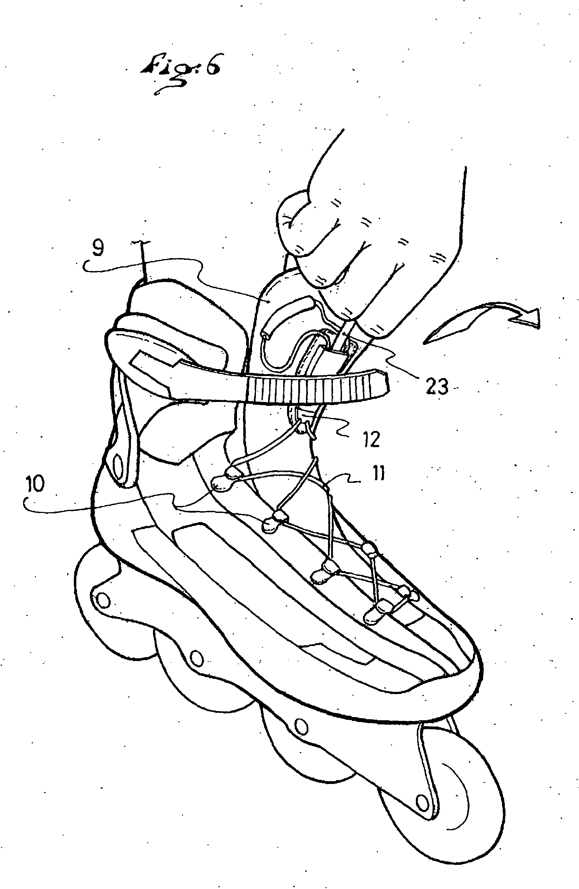

La figure 6 décrit la phase d'ouverture. L'utilisateur saisit l'organe de commande 23 et exerce une traction sur celui-ci dirigée à la fois vers le haut et vers l'avant, comme indiqué par la flèche. Dans un premier temps, le mouvement de l'organe de commande 23 qui est directement lié à l'organe de blocage, défait le coincement des brins du lacet 11. Dans un deuxième temps, il n'y a plus de mouvement relatif entre l'organe de blocage 20 et le corps 19 et le coulisseau 24 est en butée avec l'extrémité haute de la glissière 25. Ainsi, la traction sur l'organe de commande 23, génère un mouvement vers le haut et vers l'avant du bloqueur 12 et de la languette 9. La languette agit à son tour sur les brins du lacet qui peuvent coulisser librement dans le bloqueur 12 et les passants 10, tant que l'utilisateur exerce une traction sur l'organe de commande 23. A la fin de la phase d'ouverture, l'article chaussant est en position ouverte, c'est-à-dire avec la languette complètement détachée du reste de la tige de façon à faciliter l'extraction du pied. Comme c'est le cas pour le serrage, la phase d'ouverture de l'article chaussant peut s'effectuer avec la seule main qui manipule l'organe de commande 23.

D'autre part, la phase d'ouverture s'effectue comme la phase de serrage par un mouvement de traction. C'est pourquoi l'article chaussant selon le premier mode de réalisation de l'invention est particulièrement ergonomique. En effet, pour l'utilisateur, il est plus facile d'exercer un effort par une traction que par une pression. Dans le cas présent, dans la phase de serrage comme dans la phase d'ouverture, l'utilisateur est à même de mettre à profit, la force musculaire du bras qui exerce la traction, éventuellement la force musculaire du haut de son corps, mais également la force de sa jambe.

Au cas où le lacet se brise, on choisira dans ce mode de réalisation de changer le sous-ensemble constitué par le lacet 11 et le bloqueur 12. Pour ce faire, dans un premier temps, l'utilisateur, lui-même, ou le technicien de service après vente déclipse le bloqueur 12 de son encastrement dans l'ouverture 16 du capot 13. Ensuite, il désassemble l'organe de commande 23 de la partie terminale supérieure de l'organe de blocage 20. Il est à noter que ce désassemblage n'est nécessaire que dans la mesure où l'organe de commande est trop volumineux pour passer dans le tunnel 15. Plutôt qu'une poignée telle que prévue dans le mode de réalisation décrit ici, on pourra envisager un organe de commande sous la forme d'une boucle faite avec une sangle souple, laquelle peut sans problème passer par le tunnel. Le bloqueur est enfin entièrement retiré de l'ouverture 16 du capot 13, la boucle supérieure du lacet 11 passe dans le tunnel et il ne reste plus qu'à retirer le lacet de tous les passants.

Le dispositif de laçage selon l'invention rend possible une manipulation simple et ergonomique car une seule main est nécessaire, tant pour le serrage que pour le desserrage.

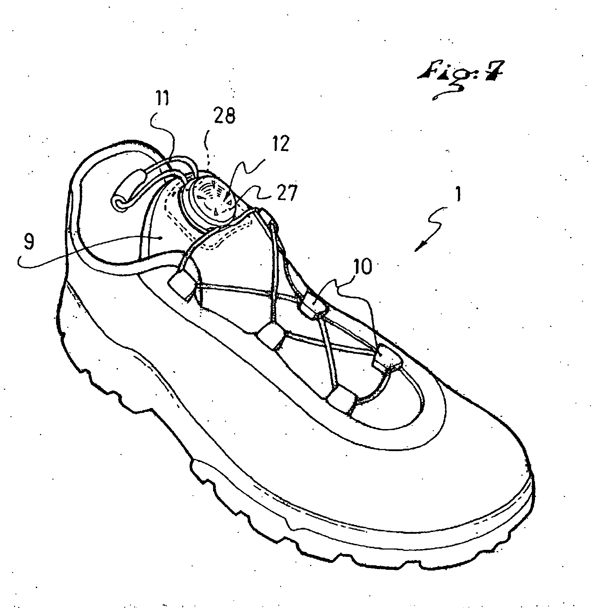

La figure 7 décrit un article chaussant selon un deuxième mode de réalisation de l'invention. L'article chaussant est une chaussure basse comportant un dispositif de laçage. Le dispositif de laçage est constitué par une pluralité de passants 10, d'un lacet 11 et d'un bloqueur 12. Le bloqueur 12 comprend un disque de commande 27, qu'il est nécessaire de presser pour pouvoir passer de l'état "blocage" à l'état "déblocage". Avantageusement le bloqueur 12 est un bloqueur bistable qui peut bien entendu se maintenir en position bloquée mais également en position débloquée, sans qu'il soit nécessaire de maintenir la pression sur le disque de commande. Un autre avantage ergonomique du bloqueur réside dans le fait que la pression que l'utilisateur doit exercer sur le disque de commande est naturelle car elle est directement perpendiculaire à la languette.

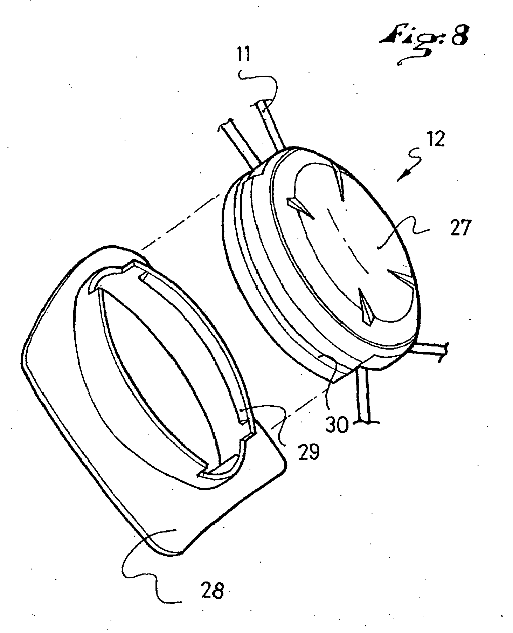

La figure 8 montre le détail de la fixation du bloqueur 12 sur la languette 9 de la chaussure. Le bloqueur 12 est clipsé sur un support 28. Le support 28 comprend une plaque d'ancrage qui est noyée à l'intérieur de la languette et en assure le maintien et une partie cylindrique de forme complémentaire au contour extérieur du bloqueur 12, de façon que celui-ci puisse être reçu dans la partie cylindrique. Des lèvres 29 font saillie à la surface intérieure de la partie cylindrique. Lorsque le bloqueur est encastré dans le support 28, ces lèvres pénètrent dans des gorges 30 ménagées sur la périphérie du bloqueur 12. Ainsi le bloqueur 12 est maintenu en place sur la languette. Grâce à la déformation élastique des parois de la partie cylindrique, une traction exercée dans une direction sensiblement perpendiculaire à la languette sur le lacet 11, libère les lèvres des gorges 30. Le bloqueur 12 peut ainsi être désolidarisé de la languette.

L'utilisation de l'article chaussant peut être décrit comme suit. Après y avoir introduit le pied, l'utilisateur tire sur le lacet. Le serrage s'effectue automatiquement car le bloqueur 12 reste encastré dans le support 28. Pour retirer l'article chaussant, l'utilisateur applique une pression sur le disque de commande, par exemple avec l'index, afin de décoincer le lacet. Simultanément, il glisse le pouce sous la languette et peut écarter la languette. Ainsi en une seule manipulation et avec une seule main, L'utilisateur décoince le bloqueur et ouvre l'article chaussant.

L'invention ne se limite pas aux quelques modes de réalisation décrits ci-dessus à titre d'exemple, mais elle couvre toute réalisation équivalente.

### NOMENCLATURE

- 1-: article chaussant
- 2-: châssis
- 3-: roues
- 4-: tige
- 5-: pan latéral
- 6-: pan médial
- 7-: zone basse
- 8-: zone haute
- 9-: languette
- 10-: passant
- 11-: lacet
- 12-: bloqueur
- 13-: capot
- 14-: zone intermédiaire
- 15-: tunnel
- 16-: ouverture
- 17-: ergot
- 18-: butée
- 19-: corps
- 20-: organe de blocage
- 21-: partie terminale inférieure
- 22-: partie terminale supérieure
- 23-: organe de commande
- 24-: coulisseau
- 25-: glissière
- 26-: lame ressort
- 27-: disque de commande
- 28-: support
- 29-: lèvre.
- 30-: gorge

## Revendications

1. Article chaussant (1) prévu pour accueillir le pied d'un utilisateur et comportant un dispositif de laçage, ledit dispositif de laçage comportant au moins deux passants (10) prévus pour permettre à un lacet (11) de glisser et un bloqueur (12) capable de coincer ledit lacet (11), ledit bloqueur (12) comportant un organe de commande (23) assurant le déblocage du lacet (11), ledit article chaussant ayant une position ouverte, permettant l'introduction du pied et une position serrée dans laquelle le pied est fermement maintenu dans ledit article chaussant, article chaussant **caractérisé en ce que** la phase de serrage, c'est-à-dire le passage de la position ouverte à la position serrée se fait par une traction sur le lacet (11) et **en ce que** la phase de desserrage, c'est-à-dire le passage de la position serrée à la position ouverte se fait par une traction sur l'organe de commande (23) du bloqueur.

2. Article chaussant selon la revendication 1, **caractérisé en ce que** la traction exercée sur le lacet (11) pour passer de la position ouverte à la position serrée ainsi que la traction exercée sur l'organe de commande pour passer de la position serrée à la position ouverte est orientée sensiblement verticalement lorsque l'article chaussant repose sur surface sensiblement horizontale.

3. Article chaussant selon l'une des revendications précédentes, **caractérisé en ce qu'**il comprend des moyens de fixation amovible dudit bloqueur (12) audit article chaussant (1) de telle façon que les phases de serrage et de desserrage de l'article chaussant puissent se faire avec une seule main et que le sous-ensemble constitué par le lacet (11) et le bloqueur (12) puisse être démonté dudit article chaussant (1) sans l'aide d'un outil.

4. Article chaussant selon la revendication précédente, **caractérisé en ce que** lesdits moyens de fixation amovible du bloqueur comprennent un capot (13) dans lequel est ménagée une ouverture (16) et que le bloqueur (12) vient s'encastrer dans ladite ouverture (16).

5. Article chaussant selon l'une des revendications précédentes, **caractérisé en ce qu'**il comporte une tige (4) ayant une ouverture longitudinale et une languette (9), ladite languette ayant une zone basse (7) prévue pour recouvrir partiellement la zone du cou-de-pied, une zone haute (8) prévue pour recouvrir partiellement le bas de jambe, et une zone intermédiaire (14) se trouvant entre ladite zone basse et ladite zone haute, ladite tige (4) étant équipée d'un dispositif de laçage comprenant un lacet (11), des passants (10), et un bloqueur (12) fixé sur la languette (9) **caractérisé en ce que** le bloqueur est fixé dans la zone intermédiaire de la languette.

6. Article chaussant prévu pour accueillir le pied d'un utilisateur et comportant un dispositif de laçage, ledit dispositif de laçage comportant au moins deux passants (10) prévus pour permettre à un lacet (11) de glisser et un bloqueur (12) capable de coincer ledit lacet (11), ledit bloqueur (12) comprenant un organe de blocage (20) mobile à l'intérieur d'un corps (19), **caractérisé en ce que** l'article chaussant (1) comprend des moyens de fixation amovible dudit bloqueur (12) audit article chaussant (1) de telle façon que les phases de serrage et de desserrage de l'article chaussant (1) puissent se faire avec une seule main et que le sous-ensemble lacet/bloqueur (11, 12) puisse être démonté dudit article chaussant (1) sans l'aide d'un outil.

7. Article chaussant selon la revendication 6, **caractérisé en ce que** lesdits moyens de fixation amovible du bloqueur comprennent un capot (13) dans lequel est ménagée une ouverture (16) et que le bloqueur (12) vient s'encastrer dans ladite ouverture (16).

8. Article chaussant selon la revendication 6, **caractérisé en ce que en ce que** ledit bloqueur (12) comprend également un organe de commande (23), sur lequel une traction exercée par l'utilisateur a pour effet le décoinçage du lacet (11).

9. Article chaussant selon la revendication précédente, **caractérisé en ce que** ledit bloqueur (12) comprend également un moyen de rappel destiné à ramener l'organe de commande en position de coincement du lacet.

10. Article chaussant selon la revendication 7, **caractérisé en ce que** ladite ouverture est placée sensiblement au niveau du pli de flexion et **en ce que** le capot comprend en outre un tunnel (15) dans lequel passe ledit lacet (11) au sortir dudit bloqueur (12).

11. Article chaussant selon la revendication 8, **caractérisé en ce qu'**il comporte une tige (4) ayant une ouverture longitudinale et une languette (9), ladite languette ayant une zone basse prévue pour recouvrir partiellement la zone du cou-de-pied, une zone haute prévue pour recouvrir partiellement le bas de jambe, et une zone intermédiaire se trouvant entre ladite zone basse et ladite zone haute, ladite tige (4) étant équipée d'un dispositif de laçage comprenant un lacet (11), des passants (10), et un bloqueur (12) fixé sur la languette (9), **caractérisé en ce que** le bloqueur est fixé dans la zone intermédiaire de la languette (9).
